# FASCICULE DE BREVET EUROPEEN

(11) **EP 1 955 035 B1**
(45) Date de publication et mention de la délivrance du brevet: **02.11.2011**
(21) Numéro de dépôt: 06830231.4
(22) Date de dépôt: 30.11.2006
(51) Int. Cl.: G01K 1/12, G01K 1/10

(54) **CANNE DE MESURE DE TEMPERATURE**
TEMPERATURMESSRÖHRE
TEMPERATURE MEASUREMENT TUBE

(30) Priorité: 30.11.2005 FR 0553658
(43) Date de publication de la demande: 13.08.2008
(73) Titulaire: Areva NC, 75009 Paris (FR); Commissariat à l'Énergie Atomique et aux Énergies Alternatives, 75015 Paris (FR)
(72) Inventeur: BRUN, Patrice, F-30200 Saint-Michel D'Euzet (FR); HOLLEBECQUE, Jean-François, F-30400 Villeneuve-Les-Avignon (FR); LACOMBE, Jacques, F-30131 Pujaut (FR); PETITJEAN, Valérie, F-92140 Clamart (FR)
(74) Mandataire: Poulin, Gérard
(86) Numéro de dépôt international: PCT/EP2006/069127
(87) Numéro de publication internationale: WO 2007/063096

(56) Documents cités:
- FR-A- 1 579 374
- GB-A- 1 120 547
- GB-A- 1 599 266
- US-A- 5 071 258

## Description

L'invention ressortit à une canne de mesure de température, destinée à des utilisations dans des matières réfractaires fondues à très haute température.

Une telle canne doit résister aux températures atteintes, et aussi à la corrosion souvent très forte qu'on rencontre dans certains verres, aussi bien dans la matière fondue que dans l'atmosphère qui s'en dégage. Les creusets contenant la matière fondue sont souvent refroidis pour leur épargner ces conditions difficiles en formant une croûte de matière solidifiée sur leur paroi, qui est plus froide et moins corrosive que la matière fondue, mais qui interdit de mesurer la température à la paroi du creuset. On recourt donc à des cannes de mesure d'assez grande longueur qu'on plonge dans le bain de matière fondue et qui contiennent un capteur de mesure de la température.

De telles cannes doivent elles-mêmes résister à la température atteinte et à la corrosion. Il est possible de les construire avec une hampe creuse dans laquelle circule de l'eau de refroidissement, de manière à leur éviter, comme au creuset, le contact direct de la matière fondue. Le refroidissement ne peut pourtant pas être prolongé jusqu'au bout de la canne, où se trouve le capteur de mesure, pour ne pas rendre celle-ci impossible. Le document GB 1 120 547 A décrit une telle canne de mesure de hautes températures comprenant un embout massif fixé par filetage à l'extrémité de la hampe refroidie. Un thermocouple de mesure s'étend dans un perçage établi au coeur de l'embout. Une température intermédiaire entre la température atteinte par l'eau de refroidissement et la température extérieure à mesurer règne dans l'embout, ce qui permet d'effectuer des mesures de la température extérieure après une correction appropriée. L'embout reste cependant soumis à la corrosion, puisque toutes les matières connues et possédant la rigidité nécessaire pour construire une longue canne lui sont sensibles à l'excès.

L'objet de l'invention est donc de construire une canne de mesure de température qui résiste à la fois aux hautes températures et à la corrosion. Sa hampe est de structure connue, creuse et refroidie, mais elle se distingue des cannes de mesure par la présence d'un embout de matière différente, d'une matière plus noble que celle de la hampe à l'égard de la corrosion. L'embout résiste donc aux conditions qu'il rencontre sans avoir besoin d'être refroidi, ce qui permet d'effectuer les mesures par un capteur y logé sans devoir remplacer fréquemment l'embout.

Il convient d'ajouter que le simple changement de matière de l'embout ne suffit pas à donner un résultat satisfaisant, puisqu'un couplage électrochimique s'établit entre l'embout et la hampe par la matière du bain fondu et engendre une réaction de corrosion de la hampe malgré le refroidissement. Des dispositions supplémentaires devaient donc être prises. Concrètement, l'embout et la hampe sont disposés en étant concentriques, séparés par une garniture circulaire isolante de l'électricité, et pressés l'un sur l'autre et de part et d'autre de la garniture par un moyen de serrage. La garniture coupe le circuit électrochimique responsable de la corrosion. Elle est exposée à l'extérieur de la canne, mais he souffre pas de la température ambiante grâce au refroidissement de la hampe, qui la couvre d'une croûte de matière solidifiée protectrice. Le moyen de serrage permet d'intercaler la garniture et de renoncer à la liaison vissée ou à toute liaison directe entre les éléments rigides de la canne que sont la hampe et l'embout.

Une bonne résistance de la canne est offerte si la hampe est construite en acier, la garniture en alumine, et la matière de l'embout en une matière métallique et notamment choisie parmi le platine, ses alliages, les métaux de sa famille, l'iridium ou le molybdène.

Une bonne façon de construire la canne, qui donne une jonction solide entre la hampe et l'embout et évite les jeux, consiste à utiliser une hampe composée de deux moitiés qu'on joint autour de l'embout et de la garniture par le moyen de serrage. Chacune des moitiés de la hampe peut alors comprendre un canal de refroidissement particulier qui évite toute jonction, hasardeuse pour l'étanchéité, de conduits de refroidissement répartis sur les deux moitiés.

La solidité de la jonction de l'embout à la hampe est plus évidente si celui-là comprend une collerette, et les moitiés de la hampe comprennent des moitiés d'une gorge de logement de la collerette, car un arrachement de l'embout est exclu ; la garniture isolante s'étend aussi dans la gorge.

On peut enfin avantageusement disposer une doublure isolante, c'est-à-dire qui crée une discontinuité électrique, entre l'embout et le capteur, entourant le capteur interne à l'intérieur de l'embout : un échauffement excessif du capteur est alors empêché même si l'embout est mince.

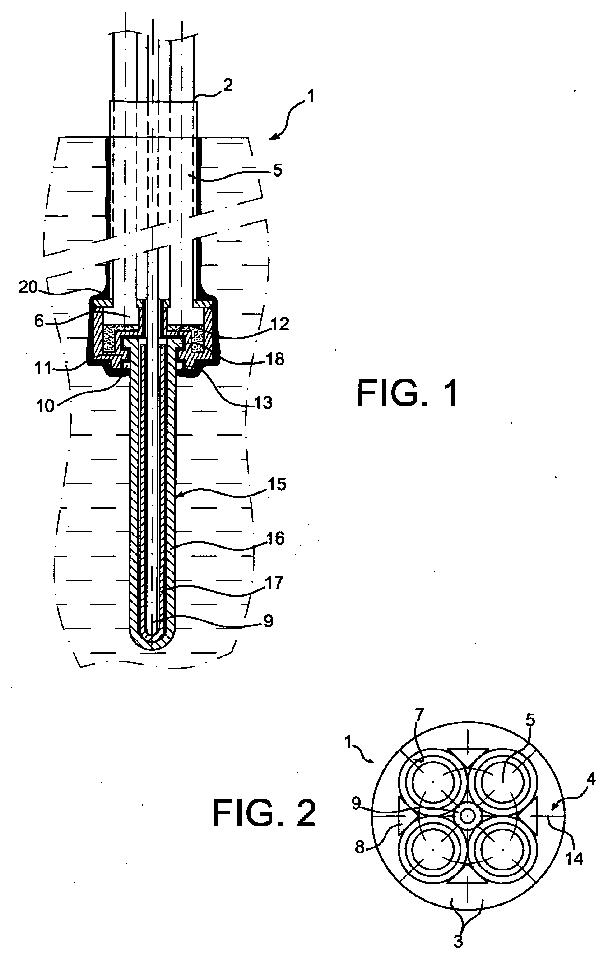

La description continue en liaison aux figures 1 et 2, qui représentent une réalisation préférée de l'invention, la figure 1 étant une vue en coupe axiale de la canne et la figure 2 en coupe transversale de la hampe. La canne comprend une hampe 1 de grande longueur à la face postérieure 2 de laquelle débouchent des conduits d'alimentation et d'évacuation d'eau de refroidissement et le fil d'un thermocouple de mesure de température. La hampe 1 est creuse et divisée en deux moitiés 3 symétriques ainsi qu'on le voit bien à la figure 2, où le plan de joint des deux moitiés 3 porte la référence 4. Chacune des moitiés 3 est occupée principalement par un circuit de refroidissement par eau et comprend une portion d'alimentation et une portion d'évacuation parallèles et qui se joignent tout en bas dans une boîte à eau 6. Les tubes du circuit 5 s'appuient sur des empreintes creuses 7 de forme complémentaire de la paroi interne des moitiés 3 et sur des cales triangulaires 8 qui s'étendent entre les tubes, qui de plus se touchent. Un agencement compact et stable est obtenu ainsi. Le fil du thermocouple 9. passe entre les quatre tubes et s'appuie sur eux. La hampe 1 est construite en acier inoxydable.

L'embase de la hampe 1 comprend un enfoncement inférieur 10 comprenant une collerette interne et une gorge 12, que se partagent les moitiés 3, au-dessus de la collerette 11. Certaines des faces internes des moitiés 3 de la hampe 1 portent une garniture d'alumine déposée comme un revêtement : c'est le cas de l'enfoncement 10, où le revêtement porte la référence 13, et du plan de joint 4 où il porte la référence 14.

L'embout, dont on va maintenant parler, porte la référence 15.

Il comprend une portion externe 16 en forme de doigt de gant construite en platine ou en un autre métal ou un alliage noble résistant à la corrosion, une portion interne 17 ou doublure en alumine en forme de doigt de gant aussi, et un évidement central occupé par l'extrémité du thermocouple 9. De plus, la portion externe 16 comprend une collerette 18 engagée dans la gorge 12. Elle ne vient jamais directement en face de la hampe 1, mais toujours devant la garniture d'alumine 13, qui est circulaire et entoure complètement l'embout 15, ce qui interdit toute conduction d'électricité avec la hampe 1. Les deux moitiés 3 sont unies entre elles par des points de soudure 19 en gardant un serrage de la garniture d'alumine 13.

L'eau de refroidissement crée une croûte 20 de matière solidifiée autour de la hampe 1 et sous elle, qui couvre les garnitures 13 et 14 d'alumine et les protège de la destruction par fusion. Cette qualité est redevable au circuit de refroidissement 5 s'étendant presque jusqu'à la jonction de la hampe 1 à l'embout 15, les coudes 6 étant adjacents à l'enfoncement 10. Le thermocouple 9 est soumis à une température qui n'est presque pas influencée par le refroidissement. Le serrage de l'embout 15 dans la hampe 1 s'effectue par une pression de la collerette interne 11 sur la portion externe 16, et le maintien est garanti par la collerette 18 dans la gorge 12.

## Revendications

1. Canne de mesure de température comprenant un capteur (9) interne dans un embout (15) de la canne, une hampe (1) jointe à l'embout, creuse et refroidie, où la hampe et l'embout sont concentriques, **caractérisée en ce que** l'embout est composé extérieurement d'une matière plus noble à l'égard de la corrosion que la hampe, la hampe et l'embout sont séparés par une garniture (13, 14) circulaire isolante de l'électricité, et pressés l'une sur l'autre et de part et d'autre de la garniture par un moyen de serrage (19).

2. Canne de mesure de température selon la revendication 1, **caractérisée en ce que** la hampe est en acier, la garniture en alumine, et la matière de l'embout est choisie parmi le platine, les alliages de platine, les métaux de la famille du platine, l'iridium, ou le molybdène.

3. Canne de mesure de température selon l'une quelconque des revendications 1 ou 2, **caractérisé en ce que** la hampe est composée de deux moitiés (3) jointes autour de l'embout et de la garniture par le moyen de serrage.

4. Canne de mesure de température selon la revendication 3, **caractérisé en ce que** chacune des moitiés de la hampe comprend un canal de refroidissement particulier.

5. Canne de mesure de température selon la revendication 4, **caractérisé en ce que** l'embout comprend une collerette (18), les moitiés (3) de la hampe comprennent des moitiés d'une gorge (12) de logement de la collerette, et la garniture s'étend dans la gorge.

6. Canne de mesure de température selon l'une quelconque des revendications précédentes, **caractérisée en ce que** l'embout comprend intérieurement une doublure isolante (17) entourant le capteur interne (9).

## Claims

1. Temperature measurement tube comprising an internal sensor (9) in an end-fitting (15) of the tube, a shaft (1) attached to the end-titting, hollow and cooled, wherein the shaft and the end-fitting are concentric, **characterised in that** the end-fitting is comprised exteriorly of a nobler material with regards to corrosion than the shaft, the shaft and the end-fitting are concentric, separated by an electrically-insulated circular lining (13, 14), and pressed onto one another and on either side of the lining by a clamping means (19).

2. Temperature measurement tube according to claim 1, **characterised in that** the shaft is made of steel, the lining of alumina, and the material at the end-fitting is chosen from among platinum, platinum alloys, metals of the platinum family, iridium, or molybdenum.

3. Temperature measurement tube according to claim 1, **characterised in that** the shaft is comprised of two halves (3) attached around the end-fitting and the lining by the clamping means.

4. Temperature measurement tube according to claim 3, **characterised in that** each of the halves of the shaft comprises a particular cooling duct.

5. Temperature measurement tube according to claim 4, **characterised in that** the end-fitting comprises a flange (18), the halves (3) of the shaft include halves of a housing groove (12) of the flange, and the lining extends into the groove.

6. Temperature measurement tube according to claim 1, **characterised in that** the end-fitting comprises interiorly an insulating liner (17) surrounding the internal sensor (9).

## Patentansprüche

1. Temperatunnessrohr, aufweisend einen innenliegenden Messfühler (9) in einer Endabdeckung (15) des Rohrs, einen mit der Endabdeckung verbundenen, hohlen und gekühlten Schaft (1), wobei der Schaft und die Endabdeckung konzentrisch sind, **dadurch gekennzeichnet, dass** die Erdabdeckung äußerlich aus einem Material besteht, dass edler bezüglich Korrosion als der Schaft ist, wobei der Schaft und die Endabdeckung durch ein elektrisch isolierendes, kreisförmiges Beschlagteil (13, 14) getrennt sind, und mittels einer Festspanneinrichtung (19) von beiderseits des Beschlagteils gegeneinander gedrückt werden.

2. Temperaturmessrohr nach Anspruch 1, **dadurch gekennzeichnet, dass** der Schaft aus Stahl besteht, das Beschlagteil aus Aluminumoxid besteht, und das Material der Endabdeckung gewählt ist zwischen Platin, Platinlegierungen, Metallen der Platin-Familie, Iridium oder Molybdän.

3. Temperaturmessfühler nach einem der Ansprüche 1 oder 2, **dadurch gekennzeichnet, dass** der Schaft aus zwei Hälften (3) besteht, die um die Endabdeckung und das Beschlagteil mittels der Festspanneinrichtung verbunden sind.

4. Temperaturmessrohr nach Anspruch 3, **dadurch gekennzeichnet dass** jede der Hälften des Schaftes einen separaten Kühlkanal aufweist.

5. Temperatunnessrohr nach Anspruch 4, **dadurch gekennzeichnet, dass** die Endabdeclcung einen Kragen (18) aufweist, die Hälften (3) des Schaftes die Hälften einer Auskehlung (12) zur Aufnahme des Kragens aufweisen, und sich das Beschlagteil in die Auskehlung erstreckt.

6. Temperatunnessrohr nach einem der vorhergehenden Ansprüche, **dadurch gekennzeichnet, dass** die Endabdeckung im Inneren ein isolierendes Futter (17) aufweist, das den innenliegenden Messfühler (9) umgibt.
